# EUROPÄISCHE PATENTSCHRIFT

(11) **EP 4 110 673 B1**
(45) Veröffentlichungstag und Bekanntmachung des Hinweises auf die Patenterteilung: **13.03.2024**
(21) Anmeldenummer: 21721854.4
(22) Anmeldetag: 13.04.2021
(51) Int. Cl.: B61D 27/00, B61D 35/00, B60H 1/00, B64D 11/02, B60H 1/24, B64D 13/02

(54) **KOMFORTLÜFTUNG EINER SANITÄRZELLE FÜR EIN FAHRZEUG**
COMFORT VENTILATION FOR A SANITARY MODULE FOR A VEHICLE
VENTILATION DE CONFORT POUR UN MODULE SANITAIRE D'UN VÉHICULE

(30) Priorität: 17.04.2020 DE 102020204916
(43) Veröffentlichungstag der Anmeldung: 04.01.2023
(73) Patentinhaber: Siemens Mobility GmbH, 81739 München (DE)
(72) Erfinder: WIEGNER, Rainer, 32139 Spenge (DE)
(74) Vertreter: Siemens Patent Attorneys
(86) Internationale Anmeldenummer: PCT/EP2021/059495
(87) Internationale Veröffentlichungsnummer: WO 2021/209414

(56) Entgegenhaltungen:
- EP-A1- 2 175 208
- BR-A2- PI0 800 410
- DE-A1-102012 003 008
- US-A1- 2018 050 122

## Beschreibung

Die Erfindung betrifft ein Fahrzeug des Personenverkehrs mit wenigstens einer Sanitärzelle und wenigstens einem Lüfter zur Beförderung von Abluft aus der Sanitärzelle sowie ein Verfahren zur Regelung des Volumenstroms.

Sanitärzellen von großräumigen Fahrzeugen, insbesondere Schienenfahrzeugen, sind üblicherweise fensterlos ausgebildet und klimatisiert, wenigstens aber mit einem Lüftungssystem zur Zufuhr von Frischluft und zur Abfuhr von Abluft versehen. Um vorgegebene klimatische Anforderungen, insbesondere im regionalen Schienenverkehr, d.h. insbesondere bei Geschwindigkeiten des Schienenfahrzeugs unter 160km/h, zu genügen, kann die Abluft einer Sanitärzelle separat über einen Lüfter aus dem Wagenkasten des Schienenfahrzeugs geführt werden.

Dadurch entsteht ein Unterdruck in der Sanitärzelle, wodurch Luft aus einem Vorraum über definierte Öffnungen, z.B. in der Tür oder unter der Tür hindurch, angesaugt wird. Diese von der Klimaanlage, je nach Witterung angewärmte oder gekühlte Luft, soll die normativ geforderte Nasszelleninnentemperatur erfüllen. In einer weiteren Anforderung muss eine Geruchsbelästigung, ausgehend von der Sanitärzelle, verhindert werden. Dieses wird in der Regel durch die Abführung der Abluft erreicht, welche einen geringen Unterdruck innerhalb der Sanitärzelle gegenüber dem Vorraum erzeugt. Dieser Unterdruck wird durch einen Lüfter, welcher die Abluft aus der Nasszelle fördert, erzielt. Der Lüfter wird dabei anhand vorgegebener, sogenannter Luftwechselraten, je nach Kabinendimension beispielsweise zwischen 100 und 200 m³/h, des Sanitärzellenkabinenvolumens auf einen festen Arbeitspunkt eingestellt. Dieser festgelegte Arbeitspunkt des Lüfters gilt für alle klimatischen und druckabhängigen Situationen im Wagenkasten. Druckschwankungen, z.B. durch die Klimaanlage, Zugbewegungen oder geöffnete Einstiegstüren hervorgerufen, werden somit nicht berücksichtigt.

Eine gattungsgemäße Sanitärzelle mit einem Lüfter zur Beförderung von Abluft aus der Sanitärzelle sowie einer Regelungseinheit zur Regelung eines vom Lüfter beförderten Volumenstroms an Abluft ist beispielsweise in den Dokumenten DE 10 2012 003 008 A1, BR PIC 800 410 A2 und US 2018/050122 A1 offenbart.

Der Erfindung liegt die Aufgabe zugrunde, die Lüftung einer Sanitärzelle eines Schienenfahrzeugs zu verbessern.

Gelöst wird die Aufgabe durch die Gegenstände der unabhängigen Patentansprüche 1 und 9. Weiterbildungen und Ausgestaltungen der Erfindung finden sich in den Merkmalen der abhängigen Patentansprüche wieder.

Ein erfindungsgemäßes Fahrzeug des Personenverkehrs, insbesondere ein Schienenfahrzeug, insbesondere des regionalen Personenverkehrs, umfasst wenigstens eine Sanitärzelle und wenigstens einen Lüfter zur Beförderung und somit zur Abfuhr von Abluft aus der Sanitärzelle. Darüber hinaus umfasst das Fahrzeug erfindungsgemäß eine Regelungseinheit zur Regelung eines vom Lüfter beförderten Volumenstroms an Abluft, welche Regelungseinheit zur Regelung von wenigstens zwei voneinander und von Null verschiedenen, vom Lüfter beförderten Volumenströmen an Abluft zumindest in Abhängigkeit eines Zustands der Sanitärzelle ausgebildet ist.

Die Regelungseinheit ist geeignet ausgebildet zur Regelung des vom Lüfter beförderten Volumenstroms an Abluft zumindest in Abhängigkeit eines Zustands der Sanitärzelle. Dabei ist der vom Lüfter beförderte Volumenstrom an Abluft aus der Sanitärzelle von der Regelungseinheit in Abhängigkeit des Zustands der Sanitärzelle auf wenigstens zwei voneinander und von Null verschiedene Beträge geregelt. Anders gewendet, der besagte Volumenstrom ist von der Regelungseinheit so geregelt, dass er über eine Betriebszeit des Fahrzeugs wenigstens zwei unterschiedliche Beträge in Abhängigkeit des jeweiligen Zustands der Sanitärzelle annehmen kann, welche jeweils ungleich Null sind.

Ein erfindungsgemäßes Verfahren zum Betreiben eines erfindungsmäßen Fahrzeugs umfasst entsprechend folgende Verfahrensschritte:
a. Ermitteln eines Zustands der Sanitärzelle;
b. Regeln, insbesondere mittels der Regelungseinheit, von wenigstens zwei voneinander und von Null verschiedenen, vom Lüfter beförderten Volumenströmen an Abluft aus der Sanitärzelle zumindest in Abhängigkeit des ermittelten Zustands der Sanitärzelle.

Zur Ermittlung des Zustands der Sanitärzelle weist das Fahrzeug, insbesondere in, an oder in unmittelbarer Umgebung der Sanitärzelle angeordnet, wenigstens einen Sensor oder mehrere Sensoren zur Erfassung von relevanten Messwerten zu Messgrö-ßen zur Beschreibung des Zustands der Sanitärzelle auf.

Zur Regelung des durch den Lüfter beförderten Volumenstroms dient die Regelungseinheit, welche ihrerseits entsprechend zumindest eingerichtet ist zur Ausführung der Verfahrensschritte a. und b. Insbesondere ist sie geeignet ausgebildet zum Empfang, zur Verarbeitung und zur Auswertung der Messwerte und zur Ermittlung des Zustands der Sanitärzelle in Abhängigkeit von wenigstens einem dieser Messwerte. Die Regelungseinheit umfasst zur Ausführung des jeweiligen Verfahrensschritts geeignete Mittel.

Zum Empfang der Messwerte, insbesondere in Form von Sensorsignalen, kann sie ein Empfangsmodul aufweisen.

Fürderhin kann die Regelungseinheit eine Recheneinheit zur Ermittlung einer Steuergröße sowie ein Stellglied zur Ausgabe einer Stellgröße an den Lüfter aufweisen. Entsprechend weist die Regelungseinheit dann eine geeignete Ausgabeeinheit zur Ausgabe der Stellgröße an den Lüfter sowie eine geeignete Verbindung mit dem Lüfter auf. Ein Regler übergibt typischerweise eine Steuergröße an ein Stellglied welches seinerseits die Stellgröße an die Regelstrecke übergibt. Die Regelungseinheit kann in diesem Fall das Stellglied mit umfassen. Der Betrag des Volumenstroms kann als Führungsgröße (Sollwert) in Abhängigkeit des Zustands der Sanitärzelle vorgegeben und in einem Speicher der Regelungseinheit vorgehalten werden. Der aktuelle Betrag des Volumenstroms (Regelgröße) kann ebenfalls unmittelbar, insbesondere mittels geeigneten Sensoren, als Messwert erfasst oder anhand von weiteren Parametern indirekt ermittelt werden, beispielsweise anhand bekannter Lüfterparameter, wie z.B. seine geometrischen Abmessungen, sowie anhand der aktuellen Lüfterdrehzahl. Die festen Parameter können dabei ebenfalls im Speicher der Regelungseinheit hinterlegt sein. Die variablen Parameter, beispielsweise in Form von Messwerten, werden der Regelungseinheit zur weiteren Verarbeitung wiederum geeignet übermittelt.

Der Lüfter ist vorteilhaft regelbar ausgebildet. Beispielsweise verfügt er über Lüfterblätter, deren Anstellwinkel einstellbar sind. Gemäß einer einfacheren Variante jedoch verfügt er über feste Lüfterblätter. Insbesondere dann ist eine Drehzahl des Lüfters variierbar, insbesondere in einem vorgegebenen Intervall, beispielsweise zwischen 0 und einer vorgegebenen Maximaldrehzahl des Lüfters, stufenlos einstellbar.

Gemäß einer vorteilhaften Weiterbildung ist die Regelungseinheit ausgebildet zur Regelung der Drehzahl des Lüfters, insbesondere zur Regelung von wenigstens zwei voneinander und von Null verschiedenen Drehzahlen des Lüfters zumindest in Abhängigkeit eines Zustands der Sanitärzelle. Wie bereits ausgeführt kann der Lüfter derart ausgebildet sein, dass seine Lüfterdrehzahl in einem vorgegebenen Intervall, beispielsweise zwischen 0 und einer vorgegebenen Maximaldrehzahl des Lüfters, beispielsweise 10.000 U/min, insbesondere stufenlos, variierbar ist. Zur Regelung des vom Lüfter beförderten Volumenstroms an Abluft wird von der Regelungseinheit entsprechend die Drehzahl des Lüfters zumindest in Abhängigkeit eines Zustands der Sanitärzelle geregelt. Die Regelungseinheit ist geeignet ausgebildet und mit dem regelbaren Lüfter in geeigneter Weise verbunden, eine Stellgröße zur Steuerung der Drehzahl des Lüfters in Abhängigkeit des Zustands der Sanitärzelle zu erzeugen und an den Lüfter auszugeben. Dabei wird die Drehzahl des Lüfters auf wenigstens zwei voneinander und von Null verschiedene Beträge geregelt, welche den vom Lüfter beförderten Volumenstrom an Abluft aus der Sanitärzelle repräsentieren. Der Volumenstrom an Abluft aus der Sanitärzelle wird somit nicht unmittelbar, sondern durch die Regelung der Drehzahl des Lüfters mittelbar geregelt.

Wird der Volumenstrom nicht unmittelbar überwacht, sondern ebenfalls über die Drehzahl des Lüfters abgeleitet, so können Stellgröße, Führungsgröße und Regelgröße jeweils unmittelbar die Drehzahl des Lüfters und mittelbar den Volumenstrom repräsentieren.

Eine weitere Weiterbildung der Erfindung besteht darin, dass die Regelungseinheit ausgebildet ist zur stufenlosen Regelung des vom Lüfter beförderten Volumenstroms an Abluft in einem vorgegebenen Intervall. Hier kann wiederum die Drehzahl des Lüfters stufenlos innerhalb des vorgegebenen Intervalls, beispielsweise zwischen 0 und einer vorgegebenen Maximaldrehzahl des Lüfters, geregelt werden.

Der Volumenstrom an Abluft aus der Sanitärzelle wird von der Regelungseinheit, insbesondere durch Regelung der Lüfterdrehzahl, so geregelt, dass er über eine Betriebszeit des Fahrzeugs den Betrag Null sowie wenigstens zwei, insbesondere jedoch viele voneinander verschiedene Beträge ungleich Null in Abhängigkeit des jeweiligen Zustands der Sanitärzelle annehmen kann. Der Zustand kann beispielsweise mittels eines Werts in einem vorgegebenen Intervall beschrieben werden. Der Volumenstrom wird entsprechend als Funktion des Zustands vorgegeben.

Die Drehzahl des Lüfters kann gemäß einer Ausführung in Abhängigkeit von Form und Größe des Lüfters geregelt sein.

Der vom Lüfter beförderte Volumenstrom an Abluft aus der Sanitärzelle kann in einem vorgegebenen Intervall, insbesondere von 0 m³/h bis 100 m³/h, insbesondere von 100 m³/h bis 50 m³/h, insbesondere von 50 m³/h bis 200 m³/h, insbesondere stufenlos, geregelt werden. Lüfter und Regelungseinheit sind dann entsprechend der Größe der Sanitärzelle - in der Regel werden zwei Typen von Sanitärzellen verbaut: Standardnasszellen und/oder (behindertengerechte) Universalnasszellen - geeignet ausgebildet.

Zur Überwachung der Drehzahl des Lüfters ist weiterbildungsgemäß ein Drehzahlgeber, insbesondere ein Tachogenerator, vorgesehen. Alternativ kann ein Inkrementalgeber, beispielsweise ein Hall-Sensor, zur Überwachung der Drehzahl des Lüfters eingesetzt sein. Der Drehzahlgeber ist entsprechend geeignet am Lüfter angeordnet. Als Regelgröße kann der Regelungseinheit dann das Signal des Drehzahlgebers, beispielsweise die Tachospannung, welches die aktuelle Drehzahl des Lüfters und somit mittelbar den vom Lüfter beförderten Volumenstrom repräsentiert, übermittelt und von dieser weiterverarbeitet werden.

Zur Steuerung der Drehzahl des Lüfters wird gemäß einer weiteren Weiterbildung eine von Regelungseinheit an den Lüfter ausgegebene Spannung, beispielsweise eine Gleichspannung oder ein plusweitenmoduliertes Spannungssignal, als Stellgröße zumindest in Abhängigkeit des Zustands der Sanitärzelle geregelt, also im Bedarfsfall erhöht oder verringert.

Mit der vom Lüfter erzeugten Tachospannung kann eine direkte Überwachung der Drehzahl des Lüfterrades bzw. der Lüfterfunktion, also auch einer Fehlfunktion, erfolgen. Der daraus resultierende Volumenstrom ergibt einen Arbeitspunkt auf der Anlagenkennlinie. Dieser Arbeitspunkt dient als Ausgangspunkt einer Regelung, wodurch Lüfterdrehzahl und entsprechend der Volumenstrom bei möglichen Druckänderungen, oder Komfortanpassungen nachgeregelt werden können. Mit der Überwachung des Volumenstroms kann somit ein erhöhter Komfort bezüglich der Luftqualität in der Sanitärzelle gewährleistet werden.

Bei unterschiedlichen Druckverhältnissen im Wagenkasten, hervorgerufen durch den Status der Klimaanlage (z.B. Kühlbetrieb, Heizbetrieb, Umluftbetrieb), durch Wagenkastenundichtigkeiten in Verbindung mit der Zuggeschwindigkeit, Tunneldurchfahrten, geöffneten Außentüren usw., kann eine definierte Abluftmenge geregelt bzw. eingestellt werden. Hierdurch kann eine mögliche Geruchsbelästigung, ausgehend vom WC System gegenüber dem Vorraum gesichert verhindert werden. Auch kann eine auftretende zu hohe Geräuschentwicklung des Fortlüfters über eine Anpassung der Drehzahl, insbesondere durch eine Verringerung der Drehzahl während der Nutzung der Sanitärzelle durch einen Fahrgast, reduziert werden. Als Regelungs-Parameter wird in diesem Beispiel unter anderem die Anwesenheit eines Benutzers in der Sanitärzelle herangezogen.

Eine weitere Möglichkeit der Komfortverbesserung für den Fahrgast wäre eine zusätzliche Temperaturüberwachung des Abluftstroms. Mit diesem Parameter könnte die Regelungseinheit entsprechende Temperaturvorgaben regeln. Ein weiterer Parameter für die Regelung mittels der Regelungseinheit könnte ein Geruchssensor im Luftstrom des Lüfters sein, welcher den Volumenstrom bei Bedarf erhöht.

Der üblicherweise fest eingestellte Arbeitspunkt des Lüfters, der einen konstante und von äußeren Umständen unabhängigen Volumenstrom an Abluft bedingt, kann durch die Verwendung eines regelbaren Lüfters, welcher beispielsweise über die sogenannte Tachospannung seine aktuelle Drehzahl ausgibt, überwacht werden. Der Arbeitspunkt auf der Anlagenkennlinie kann mittels der Regelungseinheit je nach Anforderung geregelt werden, wodurch eine direkte Kontrolle der Lüfterfunktion und eine indirekte Überwachung des Volumenstroms stattfindet.

Wie bereits im Detail ausgeführt, ist die Regelung des vom Lüfter beförderten Volumenstroms an Abluft zumindest abhängig von einem Zustand der Sanitärzelle. Zur Beschreibung des Zustands können mehrere Einflussfaktoren überwacht und entsprechend erfasst oder ermittelt werden.

Die Erfindung sieht vor, eine Anwesenheit eines Nutzers der Sanitärzelle zur Beschreibung des Zustands der Sanitärzelle zu überwachen. Hierzu wird insbesondere erfasst, ob eine Tür zur Sanitärzelle von innen verriegelt ist. Die Regelung des vom Lüfter beförderten Volumenstroms an Abluft erfolgt zumindest in Abhängigkeit eines Verriegelungszustands einer Tür der Sanitärzelle. Die Regelungseinheit ist entsprechend geeignet ausgebildet zur Regelung des vom Lüfter beförderten Volumenstroms an Abluft zumindest in Abhängigkeit des Verriegelungszustands der Tür der Sanitärzelle. Ein entsprechend geeignetes Mittel zur Erfassung des Verriegelungszustands der Tür der Sanitärzelle ist mit der Regelungseinheit in geeigneter Art und Weise verbunden. So kann die Lüfterdrehzahl bei von innen verriegelter Tür, also bei Anwesenheit eines Nutzers, abgesenkt sein, um den Geräuschpegel in der Sanitärzelle zu verringern und somit den Komfort für den Fahrgast zu erhöhen. Ist die Tür hingegen geschlossen, aber nicht verriegelt, kann die Lüfterdrehzahl angehoben sein, um einen Hohen Luftaustauch zu ermöglichen. Dies erfolgt vorteilhaft über einen vorgegebenen Zeitraum nach einer erfassten Nutzung. Eine geöffnete Tür könnte wiederum eine abweichende Regelung nach sich ziehen. Neben der Erfassung einer aktiven Nutzung der Sanitärzelle durch einen Fahrgast, kann auch eine Außerbetriebnahme der Sanitärzelle, beispielsweise durch einen Zugführer, erfasst und in der Regelung des Volumenstroms berücksichtigt werden. Die Sanitärzelle kann dann wenigstens die Zustände "unbenutzt", "benutzt", und gegebenenfalls "außer Betrieb" annehmen.

Darüber hinaus erfolgt die Regelung des vom Lüfter beförderten Volumenstroms an Abluft aus der Sanitärzelle gemäß einer weiteren Weiterbildung in Abhängigkeit einer Dauer eines unveränderten, vom Lüfter beförderten Volumenstroms an Abluft aus der Sanitärzelle. Die Regelungseinheit ist entsprechend geeignet ausgebildet zur Regelung des vom Lüfter beförderten Volumenstroms an Abluft in zusätzlicher Abhängigkeit einer Dauer eines unveränderten, vom Lüfter beförderten Volumenstroms an Abluft aus der Sanitärzelle.

Wird beispielsweise die Lüfterdrehzahl im Anschluss an einen Besuch, insbesondere nach einer aktiven Nutzung, der Sanitärzelle durch einen Fahrgast des Fahrzeugs erhöht und damit auch der vom Lüfter beförderte Volumenstrom an Abluft aus der Sanitärzelle erhöht, kann nach Erreichen einer vorgegebenen Zeitdauer seit dieser Benutzung und ohne weitere Zustandsänderung der Sanitärzelle, der Volumenstrom wieder abgesenkt und die Drehzahl des Lüfters entsprechend reduziert werden. Gemessen werden muss also zusätzlich zu den bereits bekannten Parametern und Einflussfaktoren lediglich die Zeit bzw. eine Zeitspanne. Da der vom Lüfter beförderte Volumenstrom als solcher sowie die Zeitdauer des vom Lüfter beförderten Volumenstroms nun bekannt sind, kann damit das beförderte Volumen an Abluft aus der Sanitärzelle, beispielsweise seit einer letzten Änderung des vom Lüfter beförderten Volumenstroms an Abluft, ermittelt werden. Die Regelung kann somit indirekt in Abhängigkeit des beförderten Volumens seit der letzten Änderung des vom Lüfter beförderten Volumenstroms an Abluft erfolgen.

Weitere Messwerte zu physikalischen Messgrößen zur Beschreibung des Zustands der Sanitärzelle können weiterbildungsgemäß sein:
- Luftdruck in der Sanitärzelle, insbesondere erfasst mittels eines Drucksensors;
- Temperatur in der Sanitärzelle oder in der Abluftleitung, insbesondere erfasst mittels eines Temperatursensors;
- Luftqualität in der Sanitärzelle, insbesondere der Geruch, insbesondere erfasst mittels eines Geruchssensors;
- Geräuschpegel innerhalb der Sanitärzelle, insbesondere verursacht durch den Lüfter, insbesondere erfasst mittels eines Schallpegelsensors.

Der Zustand der Sanitärzelle kann durch einen oder mehrere Parameter oder Einflussfaktoren beschrieben werden. Der Volumenstrom kann weitergebildet zusätzlich in Abhängigkeit von Messwerten zu einer oder zu mehreren der genannten Messgrößen geregelt werden. Zu den Parametern werden Messwerte erfasst und zur Regelungseinheit übermittelt und von ihr weiterverarbeitet. Einflussfaktoren können auch manuell vorgegeben werden, beispielsweise die Außerbetriebnahme der Nasszelle durch einen Zugführer.

Die Regelung des vom Lüfter beförderten Volumenstroms an Abluft aus der Sanitärzelle kann darüber hinaus zusätzlich von weiteren Parametern, welche unabhängig vom Zustand der Sanitärzelle sind, abhängig sein. Weitere Messwerte zu physikalischen Messgrößen, welche unabhängig von der Sanitärzelle erfasst werden können weiterbildungsgemäß sein:
- Druck in einem Vorraum der Sanitärzelle oder Umgebungsdruck außerhalb des Schienenfahrzeugs, insbesondere erfasst mittels eines Drucksensors;
- Temperatur in einem Vorraum der Sanitärzelle oder Umgebungstemperatur außerhalb des Schienenfahrzeugs, insbesondere erfasst mittels eines Temperatursensors;
- Geschwindigkeit des Schienenfahrzeugs, insbesondere erfasst mittels eines Geschwindigkeitsmessers;
- Luftqualität außerhalb der Sanitärzelle, insbesondere der Geruch, insbesondere erfasst mittels eines Geruchssensors;
- Geräuschpegel außerhalb der Sanitärzelle, insbesondere verursacht durch den Lüfter, insbesondere erfasst mittels eines Schallpegelsensors.

Der Volumenstrom kann weitergebildet zusätzlich in Abhängigkeit von Messwerten zu einer oder zu mehreren der genannten Messgrößen geregelt werden. Die Regelungseinheit ist entsprechend geeignet ausgebildet und mit den entsprechenden Messaufnehmern zur Übermittlung der Messwerte verbunden.

Darüber hinaus kann die Regelungseinheit auch mit einem zentralen Steuergerät des Fahrzeugs zur Übermittlung von Einflussfaktoren oder Parametern verbunden sein.

Solche Einflussfaktoren können beispielsweise Informationen über geöffnete Außentüren des Fahrzeugs, Tunnelfahrten oder über den Status einer zentralen Klimaanlage (z.B. Kühlbetrieb, Heizbetrieb, Umluftbetrieb) des Fahrzeugs und/oder der Sanitärzelle sein.

In einer weiteren Weiterbildung der Erfindung ist die Regelungseinheit zur Regelung des vom Lüfter beförderten Volumenstroms an Abluft zumindest in Abhängigkeit eines Zustands der Sanitärzelle und in Abhängigkeit wenigstens eines vom Zustand der Sanitärzelle unabhängig erfassten Messwerts zu wenigstens einer physikalischen Messgröße ausgebildet ist.

Eine vorteilhafte Ausgestaltung der Erfindung ist darin zu sehen, dass die Regelungseinheit geeignet aus gebildet ist zur Regelung des vom Lüfter beförderten Volumenstroms an Abluft aus der Sanitärzelle zumindest in Abhängigkeit eines Zustands, insbesondere des Verriegelungszustands der Tür der Sanitärzelle, der Sanitärzelle und in Abhängigkeit einer Druckdifferenz zwischen dem Innenraum der Sanitärzelle und einem Vorraum zur Sanitärzelle. Der vom Lüfter beförderte Volumenstrom an Abluft aus der Sanitärzelle wird entsprechend in Abhängigkeit einer Druckdifferenz zwischen dem Innenraum der Sanitärzelle und einem Vorraum zur Sanitärzelle geregelt.

Die Druckdifferenz zwischen Sanitärzelle und Vorraum kann mittels eines Differenzdrucksensors erfasst oder mittels zweier Drucksensoren, jeweils einer im Vorraum und in der Sanitärzelle, ermittelt werden. Dies ist insbesondere bei Wagenkastenundichtigkeiten relevant, welche in Verbindung mit sich signifikant verändernden Zuggeschwindigkeit oder bei Tunnelfahrten zu Druckschwankungen im Fahrzeug führen können.

Gemäß einer weiteren Weiterbildung ist eine Abluftleitung, durch welche die Abluft aus der Sanitärzelle mittels des Lüfters befördert wird, frei von einem Drosselorgan. Das Regeln des Volumenstroms an Abluft aus der Sanitärzelle durch die Abluftleitung erfolgt entsprechend ausschließlich durch das Regeln des regelbaren Lüfters, insbesondere dessen Drehzahl, zumindest in Abhängigkeit des ermittelten Zustands der Sanitärzelle. Zur Regelung von Volumenströmen sind sogenannte Volumenstromregler bekannt geworden. Volumenstromregler sind regelbare Drosselorgane zur Freigabe und zur Begrenzung eines Volumenstroms in einer Leitung. Zur Regelung des Volumenstroms an Abluft wird gemäß dieser Weiterbildung auf ein Drosselorgan und dessen Regelung verzichtet. Eine Erhöhung oder Verringerung des Volumenstroms an Abluft wird allein mit dem geregelten Lüfter bewerkstelligt. Die Leitung zur Abfuhr von der Abluft aus der Sanitärzelle verläuft dabei zwischen einer Öffnung der Leitung zur Sanitärzelle, also zum Innenraum der Sanitärzelle, hin und einer Öffnung der Leitung zur Abgabe der Abluft an die Umgebung der Sanitärzelle, insbesondere des Fahrzeugs. Der Lüfter kann inmitten der Leitung angeordnet sein oder er ist im Bereich der Öffnung der Leitung zum Innenraum der Sanitärzelle hin angeordnet. Die gesamte Leitung, d.h. vor und/oder nach dem Lüfter, ist frei von einer Drosseleinrichtung zur Regelung des Volumenstroms an Abluft durch die Leitung.

Durch die intelligente Fortluftsteuerung wird die Lüftung einer Sanitärzelle eines Fahrzeugs, insbesondere eines Schienenfahrzeugs, insbesondere des regionalen Personenverkehrs, bzw. die Klimatisierung des Fahrzeugs signifikant effizienter, insbesondere energieeffizienter, und gleichzeitig wird der Komfort für die Fahrgäste erhöht.

Die Erfindung lässt zahlreiche Ausführungsformen zu. Sie wird anhand der nachfolgenden Figuren näher erläutert, in der ein Ausgestaltungsbeispiel dargestellt ist.
- Fig. 1: zeigt schematisch einen Logik-Ablaufplan zu Steuerung eines Lüfters einer Sanitärzelle,
- Fig. 2: zeigt einen Volumenstromverlauf des Lüfters über die Zeit bzw. verschiedene Benutzungszustände der Sanitärzelle.

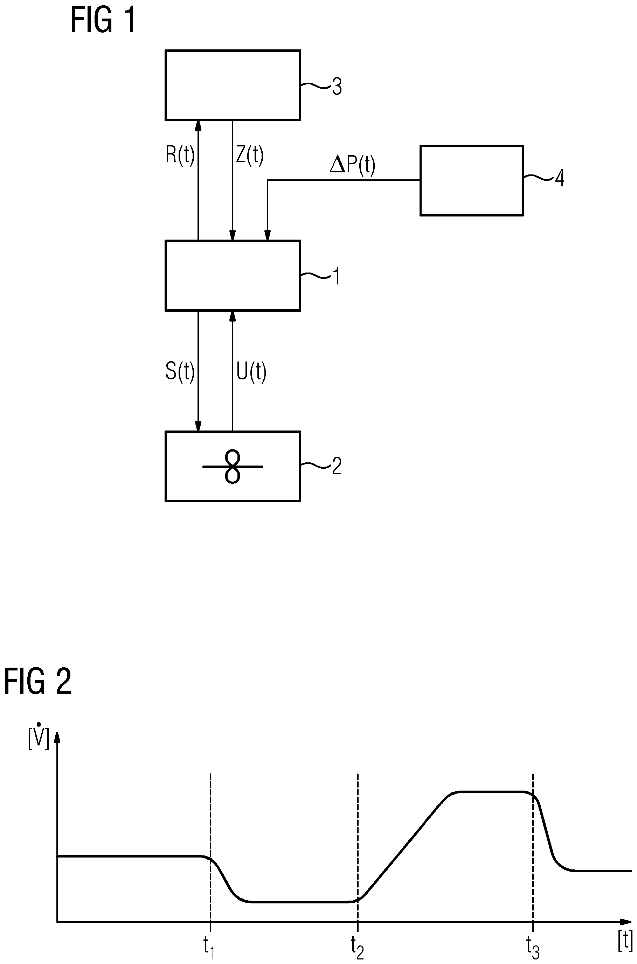

In Fig. 1 ist ein Flussdiagramm dargestellt, in welchem ein Ablauf des erfindungsgemäßen Verfahrens schematisch veranschaulicht wird.

Eine Regelungseinheit 1 ist gekoppelt mit einer Steuerungseinheit 3 einer Sanitärzelle, welche ihrerseits mit einer Verriegelungseinrichtung einer Tür der Sanitärzelle gekoppelt ist. Die Regelungseinheit 1 meldet an die Steuerungseinheit 3 einen Status R zurück, beispielsweise "an", "aus" oder "außer Betrieb". Darüber hinaus könnte auch ein aktuell von einem von der Regelungseinheit 1 geregelten Lüfter 2 beförderter Volumenstrom V an Abluft aus der Sanitärzelle heraus zurückgemeldet werden. Von der Steuerungseinheit 3 der Sanitärzelle erhält die Regelungseinheit 1 wiederum Meldungen über den Zustand Z der Sanitärzelle. Im einfachsten Fall sind dies Informationen zu einem Verriegelungszustand der Tür der Sanitärzelle, wie beispielsweise "offen", "geschlossen, aber nicht verriegelt" oder "geschlossen und von innen verriegelt". Darüber hinaus kann die Steuerungseinheit 3 der Sanitärzelle auch der Regelungseinheit 1 einen Zustand Z "Sanitärzelle außer Betrieb" melden.

Zusätzlich zum Zustand Z der Sanitärzelle erhält die Regelungseinheit 1 auch Messwerte P zu einer Druckdifferenz zwischen dem Innenraum der Sanitärzelle und einem Vorraum zur Sanitärzelle. Zur Übermittlung der Messwerte P ist die Regelungseinheit 1 mit einem Differenzdrucksensor 4 verbunden.

Die Regelungseinheit 1 ist nun ausgebildet, den regelbaren Lüfter 2 zu regeln, insbesondere dessen Drehzahl, insbesondere stufenlos, in Abhängigkeit des Zustands Z und wenigstens eines Messwerts P betreffend die Druckdifferenz zwischen Innenraum der Sanitärzelle und einem Vorraum zur Sanitärzelle. Dafür ist die Regelungseinheit 1 mit dem Lüfter 2 in geeigneter Art und Weise zur Übermittlung eines Steuersignals S von der Regelungseinheit zum Lüfter 2 verbunden. Ziel ist die Regelung des vom Lüfter 2 beförderten Volumenstroms V an Abluft aus der Sanitärzelle heraus in Abhängigkeit des Zustands Z und wenigstens eines Messwerts P betreffend die Druckdifferenz zwischen Innenraum der Sanitärzelle und einem Vorraum zur Sanitärzelle. Die Regelung ist dabei derart, dass sie wenigstens zwei voneinander und von Null verschiedene, vom Lüfter 2 beförderte Volumenströme V an Abluft aus der Sanitärzelle annehmen kann. Dabei wird der Lüfter 2 auf wenigstens zwei voneinander und von Null verschiedenen Drehzahlen geregelt. Darüber hinaus kann der Volumenstrom V logischerweise auch zusätzlich Null sein, insbesondere ohne Lüfterbetrieb.

Zur Überwachung der Drehzahl des Lüfters ist ein Drehzahlgeber des Lüfters 2 mit der Regelungseinheit 1 verbunden, der beispielsweise eine Tachospannung U in Abhängigkeit der Drehzahl n an die Regelungseinheit 1 rückmeldet.

Neben dem Zustand der Sanitärzelle und dem Differenzdrucksignal könnten weitere Messwerte zu anderen Parametern zusätzlich in die Regelung mit einfließen.

Fig. 2 zeigt nun einen typischen Verlauf des vom Lüfter beförderten Volumenstroms V an Abluft aus der Sanitärzelle heraus über die Zeit t eines Nutzungsintervalls. Der Drehzahlverlauf wäre qualitativ identisch.

Zunächst ist die Sanitärzelle unbenutzt. Der vom Lüfter beförderte Volumenstroms V an Abluft aus der Sanitärzelle beträgt einen voreingestellten Wert zu Aufrechterhaltung einer vorgegebenen Druckdifferenz zwischen dem Innenraum der Sanitärzelle und einem Vorraum zur Sanitärzelle.

Zum Zeitpunkt t₁ betritt ein Fahrgast die Sanitärzelle und verriegelt deren Tür von innen. Zur Komforterhöhung werden die Lüfterdrehzahl und der Volumenstrom V nun auf ein Minimum reduziert. Dadurch sinkt der Geräuschpegel in der Sanitärzelle.

Zum Zeitpunkt t₂ verlässt der Fahrgast die Sanitärzelle wieder, wodurch diese wiederum unbenutzt ist. Nach der erfolgten Benutzung wird die Lüfterdrehzahl und der Volumenstrom V an Abluft von der Regelungseinheit signifikant erhöht, um schnell eine möglichst vollständigen Luftaustausch in der Sanitärzelle herzustellen. Ist zum Zeitpunkt t₃ ein vorgegebener Grenzwert an befördertem Volumen an Abluft erreicht, wird der vom Lüfter beförderte Volumenstrom V, insbesondere die Lüfterdrehzahl, wieder abgesenkt. Hier wiederum auf den voreingestellten Wert zu Aufrechterhaltung der vorgegebenen Druckdifferenz zwischen dem Innenraum der Sanitärzelle und dem Vorraum zur Sanitärzelle.

## Patentansprüche

1. Fahrzeug des Personenverkehrs mit wenigstens einer Sanitärzelle und wenigstens einem Lüfter (2) zur Beförderung von Abluft aus der Sanitärzelle, wobei es eine Regelungseinheit (1) zur Regelung eines vom Lüfter beförderten Volumenstroms an Abluft aufweist, welche Regelungseinheit zur Regelung von wenigstens zwei voneinander und von Null verschiedenen, vom Lüfter (2) beförderten Volumenströmen an Abluft zumindest in Abhängigkeit eines Zustands der Sanitärzelle ausgebildet ist, wobei die Regelungseinheit (1) ausgebildet ist zur Regelung des vom Lüfter (2) beförderten Volumenstroms an Abluft in Abhängigkeit der Anwesenheit eines Nutzers der Sanitärzelle,
**dadurch gekennzeichnet, dass** die Regelungseinheit (1) zusätzlich ausgebildet ist zur Regelung des vom Lüfter beförderten Volumenstroms an Abluft in Abhängigkeit eines Drucks im Innenraum der Sanitärzelle und/oder in Abhängigkeit eines Drucks in einem Vorraum zur Sanitärzelle.

2. Fahrzeug nach Anspruch 1, **dadurch gekennzeichnet, dass** die Regelungseinheit (1) ausgebildet ist zur Regelung einer Drehzahl des Lüfters (2).

3. Fahrzeug nach Anspruch 2, **dadurch gekennzeichnet, dass** es einen Drehzahlgeber zur Überwachung der Drehzahl des Lüfters aufweist.

4. Fahrzeug nach einem der Ansprüche 1 bis 3, **dadurch gekennzeichnet, dass** die Regelungseinheit (1) ausgebildet ist zur stufenlosen Regelung des vom Lüfter (2) beförderten Volumenstroms an Abluft in einem vorgegebenen Intervall.

5. Fahrzeug nach einem der Ansprüche 1 bis 4, **dadurch gekennzeichnet, dass** die Regelungseinheit (1) ausgebildet ist zur Regelung des vom Lüfter beförderten Volumenstroms an Abluft in Abhängigkeit eines Verriegelungszustands einer Tür der Sanitärzelle.

6. Fahrzeug nach einem der Ansprüche 1 bis 5, **dadurch gekennzeichnet, dass** die Regelungseinheit (1) ausgebildet ist zur Regelung des vom Lüfter beförderten Volumenstroms an Abluft aus der Sanitärzelle in zusätzlicher Abhängigkeit einer Dauer eines unveränderten, vom Lüfter beförderten Volumenstroms an Abluft aus der Sanitärzelle.

7. Fahrzeug nach einem der Ansprüche 1 bis 5, **dadurch gekennzeichnet, dass** die Regelungseinheit (1) ausgebildet ist zur Regelung des vom Lüfter beförderten Volumenstroms an Abluft aus der Sanitärzelle in zusätzlicher Abhängigkeit einer Temperatur in der Sanitärzelle und/oder einer Temperatur der vom Lüfter beförderten Abluft und/oder eines Geruchs in der Sanitärzelle und/oder eines Geräuschpegels in der Sanitärzelle.

8. Fahrzeug nach einem der Ansprüche 1 bis 7, **dadurch gekennzeichnet, dass** eine Abluftleitung, durch welche die Abluft aus der Sanitärzelle mittels des Lüfters befördert wird, frei von einem Drosselorgan ist.

9. Verfahren zum Betreiben eines Fahrzeugs nach einem der Ansprüche 1 bis 8, **gekennzeichnet durch** folgende Verfahrensschritte:
a. Ermitteln eines Zustands einer Sanitärzelle des Schienenfahrzeugs, wobei eine Anwesenheit eines Nutzers der Sanitärzelle zur Beschreibung des Zustands der Sanitärzelle überwacht wird;
b. Regeln eines durch einen Lüfter beförderten Volumenstroms an Abluft aus der Sanitärzelle zumindest in Abhängigkeit des ermittelten Zustands, wobei das Regeln des durch den Lüfter beförderten Volumenstroms an Abluft aus der Sanitärzelle in Abhängigkeit der Anwesenheit eines Nutzers der Sanitärzelle und zusätzlich in Abhängigkeit eines Drucks im Innenraum der Sanitärzelle und/oder in Abhängigkeit eines Drucks in einem Vorraum zur Sanitärzelle erfolgt.

10. Verfahren nach Anspruch 9, **dadurch gekennzeichnet, dass** das Regeln des durch den Lüfter beförderten Volumenstroms an Abluft aus der Sanitärzelle gemäß Verfahrensschritt b. zumindest in Abhängigkeit eines Verriegelungszustands einer Tür der Sanitärzelle erfolgt.

11. Verfahren nach einem der Ansprüche 9 oder 10, **dadurch gekennzeichnet, dass** das Regeln des durch den Lüfter beförderten Volumenstroms an Abluft aus der Sanitärzelle gemäß Verfahrensschritt b. zusätzlich in Abhängigkeit einer Dauer eines unveränderten, vom Lüfter beförderten Volumenstroms an Abluft aus der Sanitärzelle erfolgt.

12. Verfahren nach einem der Ansprüche 9 bis 11, **dadurch gekennzeichnet, dass** das Regeln des durch den Lüfter beförderten Volumenstroms an Abluft aus der Sanitärzelle gemäß Verfahrensschritt b. zusätzlich in Abhängigkeit einer Temperatur in der Sanitärzelle und/oder einer Temperatur der vom Lüfter beförderten Abluft und/oder eines Geruchs in der Sanitärzelle und/oder eines Geräuschpegels in der Sanitärzelle erfolgt.

13. Verfahren nach einem der Ansprüche 9 bis 12, **dadurch gekennzeichnet, dass** das Regeln des durch den Lüfter beförderten Volumenstroms an Abluft aus der Sanitärzelle gemäß Verfahrensschritt b. ausschließlich durch das Regeln einer Drehzahl des Lüfters (2) erfolgt.

## Claims

1. Passenger-transport vehicle having at least one sanitary module and at least one fan (2) for feeding waste air out of the sanitary module, wherein said vehicle has a closed-loop control unit (1) for controlling a fan-fed volumetric flow of waste air, which closed-loop control unit is designed so that at least two volumetric flows of waste air which differ from one another and are other than zero, and are fed by the fan (2), are controlled by it at least in dependence on a state of the sanitary module, wherein the closed-loop control unit (1) is designed so that the volumetric flow of waste air, which is fed by the fan (2), is controlled by it in dependence on the presence of a person using the sanitary module, **characterized in that** the closed-loop control unit (1) is additionally designed so that the fan-fed volumetric flow of waste air is controlled by it in dependence on a pressure in the interior space of the sanitary module and/or in dependence on a pressure in a space in front of the sanitary module.

2. Vehicle according to Claim 1, **characterized in that** the closed-loop control unit (1) is designed to control a speed of the fan (2).

3. Vehicle according to Claim 2, **characterized in that** it has a speed sensor for monitoring the speed of the fan.

4. Vehicle according to one of Claims 1 to 3, **characterized in that** the closed-loop control unit (1) is designed so that the volumetric flow of waste air, which is fed by the fan (2), is controlled by it in a stepless manner in a predetermined range.

5. Vehicle according to one of Claims 1 to 4, **characterized in that** the closed-loop control unit (1) is designed so that the fan-fed volumetric flow of waste air is controlled by it in dependence on a locking state of a door of the sanitary module.

6. Vehicle according to one of Claims 1 to 5, **characterized in that** the closed-loop control unit (1) is designed so that the fan-fed volumetric flow of waste air out of the sanitary module is controlled by it, in addition, in dependence on a duration over which the fan-fed volumetric flow of waste air out of the sanitary module remains unchanged.

7. Vehicle according to one of Claims 1 to 5, **characterized in that** the closed-loop control unit (1) is designed so that the fan-fed volumetric flow of waste air out of the sanitary module is controlled by it, in addition, in dependence on a temperature in the sanitary module and/or on a temperature of the fan-fed waste air and/or on an odour in the sanitary module and/or on a noise level in the sanitary module.

8. Vehicle according to one of Claims 1 to 7, **characterized in that** a waste-air line, through which the waste air is fed out of the sanitary module by means of the fan, is free of a throttle element.

9. Method for operating a vehicle according to one of Claims 1 to 8, **characterized by** the following method steps:
a. a state of a sanitary module of the rail vehicle is determined, wherein a presence of a person using the sanitary module is monitored for the purpose of describing the state of the sanitary module;
b. a fan-fed volumetric flow of waste air out of the sanitary module is controlled at least in dependence on the determined state, wherein the fan-fed volumetric flow of waste air out of the sanitary module is controlled in dependence on the presence of a person using the sanitary module and, in addition, in dependence on a pressure in the interior space of the sanitary module and/or in dependence on a pressure in a space in front of the sanitary module.

10. Method according to Claim 9, **characterized in that** the fan-fed volumetric flow of waste air out of the sanitary module is controlled in accordance with method step b., at least in dependence on a locking state of a door of the sanitary module.

11. Method according to either of Claims 9 and 10, **characterized in that** the fan-fed volumetric flow of waste air out of the sanitary module is controlled in accordance with method step b., in addition, in dependence on a duration over which a fan-fed volumetric flow of waste air out of the sanitary module remains unchanged.

12. Method according to one of Claims 9 to 11, **characterized in that** the fan-fed volumetric flow of waste air out of the sanitary module is controlled in accordance with method step b., in addition, in dependence on a temperature in the sanitary module and/or on a temperature of the fan-fed waste air and/or on an odour in the sanitary module and/or on a noise level in the sanitary module.

13. Method according to one of Claims 9 to 12, **characterized in that** the fan-fed volumetric flow of waste air out of the sanitary module is controlled in accordance with method step b., exclusively by way of the control of a speed of the fan (2).

## Revendications

1. Véhicule du transport des personnes comprenant au moins un module sanitaire et au moins un ventilateur (2) pour faire sortir de l'air vicié du module sanitaire, dans lequel il comporte une unité (1) de régulation pour la régulation d'un courant en volume d'air vicié véhiculé par le ventilateur, laquelle unité de régulation est constituée pour la régulation au moins en fonction d'un état du module sanitaire d'au moins deux courants en volume, différents l'un de l'autre et de zéro, d'air vicié véhiculés par le ventilateur (2), dans lequel l'unité (1) de régulation est constituée pour la régulation du courant en volume d'air vicié véhiculé par le ventilateur (2) en fonction de la présence d'un utilisateur du module sanitaire,
**caractérisé en ce que** l'unité (1) de régulation est constituée en outre pour la régulation du courant en volume d'air vicié véhiculé par le ventilateur en fonction d'une pression à l'intérieur du module sanitaire et/ou en fonction d'une pression dans une antichambre du module sanitaire.

2. Véhicule suivant la revendication 1, **caractérisé en ce que** l'unité (1) de régulation est constituée pour la régulation d'une vitesse de rotation du ventilateur (2).

3. Véhicule suivant la revendication 2, **caractérisé en ce qu'**il comporte un indicateur de vitesse de rotation pour le contrôle de la vitesse de rotation du ventilateur.

4. Véhicule suivant l'une des revendications 1 à 3, **caractérisé en ce que** l'unité (1) de régulation est constituée pour la régulation, sans palier, du courant en volume d'air vicié véhiculé par le ventilateur (2) dans un intervalle donné à l'avance.

5. Véhicule suivant l'une des revendications 1 à 4, **caractérisé en ce que** l'unité (1) de régulation est constituée pour la régulation du courant en volume d'air vicié véhiculé par le ventilateur en fonction d'un état de verrouillage d'une porte du module sanitaire.

6. Véhicule suivant l'une des revendications 1 à 5, **caractérisé en ce que** l'unité (1) de régulation est constituée pour la régulation de la sortie du module sanitaire du courant en volume d'air vicié véhiculé par le ventilateur, en fonction en outre d'une durée d'une sortie du module sanitaire d'un courant en volume inchangé d'air vicié véhiculé par le ventilateur.

7. Véhicule suivant l'une des revendications 1 à 5, **caractérisé en ce que** l'unité (1) de régulation est constituée pour la régulation de la sortie du module sanitaire du courant en volume d'air vicié véhiculé par le ventilateur, en fonction en outre d'une température dans le module sanitaire et/ou d'une température de l'air vicié véhiculé par le ventilateur et/ou d'une odeur dans le module sanitaire et/ou d'un niveau de bruit dans le module sanitaire.

8. Véhicule suivant l'une des revendications 1 à 7, **caractérisé en ce qu'**un conduit pour de l'air vicié, par lequel on fait sortir l'air vicié du module sanitaire au moyen du ventilateur, est exempt d'organe d'étranglement.

9. Procédé pour faire fonctionner un véhicule suivant l'une des revendications 1 à 8, **caractérisé par** les stades de procédé suivants :
a. détermination d'un état d'un module sanitaire du véhicule ferroviaire, dans lequel on contrôle une présence d'un utilisateur du module sanitaire pour la description de l'état du module sanitaire ;
b. régulation d'un courant en volume d'air vicié sorti par un ventilateur du module sanitaire, au moins en fonction de l'état déterminé, dans lequel la régulation du courant en volume d'air vicié sortant par le ventilateur du module sanitaire s'effectue en fonction de la présence d'un utilisateur du module sanitaire et en outre en fonction d'une pression à l'intérieur du module sanitaire et/ou en fonction d'une pression dans une antichambre du module sanitaire.

10. Procédé suivant la revendication 9, **caractérisé en ce que** la régulation du courant en volume d'air vicié sorti par le ventilateur du module sanitaire suivant le stade b. du procédé s'effectue au moins en fonction d'un état de verrouillage d'une porte du module sanitaire.

11. Procédé suivant l'une des revendications 9 ou 10, **caractérisé en ce que** la régulation du courant en volume d'air vicié sorti du module sanitaire par le ventilateur suivant le stade b. du procédé s'effectue en outre en fonction d'une durée d'un courant en volume inchangé d'air vicié sorti du module sanitaire par le ventilateur.

12. Procédé suivant l'une des revendications 9 à 11, **caractérisé en ce que** la régulation du courant en volume d'air vicié sorti du module sanitaire par le ventilateur suivant le stade b. du procédé s'effectue en outre en fonction d'une température dans le module sanitaire et/ou d'une température de l'air vicié véhiculé par le ventilateur et/ou d'une odeur dans le module sanitaire et/ou d'un niveau de bruit dans le module sanitaire.

13. Procédé suivant l'une des revendications 9 à 12, **caractérisé en ce que** la régulation du courant en volume d'air vicié sorti du module sanitaire par le ventilateur suivant le stade b. du procédé s'effectue exclusivement par le réglage d'une vitesse de rotation du ventilateur (2).
